# DEMANDE DE BREVET EUROPEEN

(11) **EP 0 667 471 A1**
(43) Date de publication de la demande: **16.08.1995**
(21) Numéro de dépôt: 94402752.3
(22) Date de dépôt: 01.12.1994
(51) Int. Cl.: F16K 17/38

(54) **Dispositif à clapet pour couper un circuit de fluide en cas d'incendie**

(30) Priorité: 27.01.1994 FR 9400877
(71) Demandeur: SOCIETE NOUVELLE DE ROBINETTERIE INDUSTRIELLE S.N.R.I. S.A., F-16700 Ruffec (FR)
(72) Inventeur: Lemaire, Jacques, F-16700 Ruffec (FR)
(74) Mandataire: Michardière, Bernard

(57) **Abrégé**

Le dispositif (D) comporte un clapet (1) à battant rotatif, comprenant un corps de clapet (3) dans lequel est monté rotatif un arbre (6) faisant saillie à l'extérieur du corps. Le dispositif (D) comporte en outre un système mécanique (S) pour la commande de la fermeture du clapet (1), propre à agir sur la partie de l'arbre (6) extérieure au corps de clapet (3), et déclenché par des moyens fusibles (M) sensibles à la température extérieure. Le système mécanique (S) comprend, d'une part, un moyen élastique de torsion (T) situé à l'extérieur du corps de clapet (3) et tendu de manière à solliciter l'arbre (6) et le battant en rotation dans le sens de la fermeture, et d'autre part, un organe de liaison (27) calé en rotation sur l'arbre (6) et comportant des trous (27a) propres à être amenés en regard de trous correspondants (23) prévus dans une pièce (21) arrêtée en rotation par rapport au corps de clapet (3) ; les moyens fusibles (M) sont constitués par au moins un organe (38) de blocage en rotation, engagé dans un trou (27a) de l'organe de liaison et dans un trou (23) de la pièce (21).

## Description

L'invention est relative à un dispositif pour couper un circuit de fluide en cas d'incendie, du genre de ceux qui comportent un clapet à battant rotatif, ce clapet comprenant un corps de clapet dans lequel est monté rotatif un arbre faisant saillie à l'extérieur du corps, l'ensemble étant tel que lorsque le battant est en position ouverte la veine de fluide est entièrement libérée, le dispositif comportant en outre un système mécanique pour la commande de la fermeture du clapet, ce système mécanique étant propre à agir sur la partie de l'arbre extérieure au corps de clapet, le système mécanique étant déclenché par des moyens fusibles sensibles à la température extérieure.

US-A-3 860 024 concerne un dispositif de ce genre comprenant un bras, retenu par un élément fusible à l'extérieur du corps de clapet, à l'encontre de l'action d'un ressort situé à l'intérieur du corps de clapet.

Le mécanisme constitué par le bras et l'élément fusible est relativement encombrant et fragile car non protégé contre des déclenchements accidentels causés, par exemple, par des chocs non souhaités d'objets manipulés dans l'environnement immédiat du dispositif.

Il est souhaitable en outre que les opérations de maintenance et de vérification du système mécanique de commande puissent être effectuées simplement, et aussi fréquemment que souhaité, en gênant le moins possible le fonctionnement de l'installation équipée d'un tel dispositif.

L'invention a pour but, surtout, de fournir un dispositif, tel que défini précédemment, qui ne présente plus, ou à un degré moindre, les inconvénients rappelés ci-dessus.

On souhaite en particulier que le dispositif soit sûr, robuste, fiable, d'une maintenace et d'un étalonnage simples à mettre en oeuvre. On souhaite également que ce dispositif soit d'un prix de revient acceptable.

Selon l'invention, un dispositif pour couper un circuit de fluide en cas d'incendie, du genre défini précédemment, est caractérisé par le fait que le système mécanique comprend, d'une part, un moyen élastique de torsion situé à l'extérieur du corps de clapet et tendu de manière à solliciter l'arbre et le battant en rotation dans le sens de la fermeture, et d'autre part, un organe de liaison calé en rotation sur l'arbre et comportant des trous propres à être amenés en regard de trous correspondants prévus dans une pièce arrêtée en rotation par rapport au corps de clapet, les moyens fusibles étant constitués par au moins un organe de blocage en rotation, engagé dans un trou de l'organe de liaison et dans un trou de la pièce.

Avantageusement, le moyen élastique de torsion est logé dans un boîtier solidaire du corps de clapet.

De préférence, le moyen élastique de torsion est constitué par un ressort hélicoïdal de torsion, disposé coaxialement à l'arbre, une extrémité du ressort étant bloquée en rotation relativement au corps de clapet tandis que l'autre extrémité du ressort est liée en rotation à l'extrémité de l'arbre.

L'organe de liaison peut être constitué par une pièce intermédiaire ou crabot lié en rotation à l'extrémité du prolongement de l'arbre par un organe entraîneur démontable.

Avantageusement, l'extrémité de l'arbre a un contour polygonal, et l'organe entraîneur est constitué par une douille présentant un logement intérieur de section conjuguée de celle de l'extrémité de l'arbre.

De préférence, le crabot comporte, du côté intérieur, une collerette sur laquelle est fixé un tube autour duquel est disposé le ressort.

Le boîtier peut comporter, au voisinage de sa fixation sur un manchon, fixé sur le corps de clapet, deux fenêtres diamétralement opposées, tandis que l'arbre comporte deux méplats diamétralement opposés auxquels les fenêtres permettent d'accéder de l'extérieur, avec une clé appropriée.

Avantageusement, les organes de blocage en rotation sont constitués par des pions cylindriques en métal ou en alliage fusible à température prédéterminée.

Un disque indicateur peut être monté en bout d'arbre, calé en rotation sur cet arbre, ce disque indicateur comportant des zones d'indication, en particulier de couleurs différentes, tandis qu'une plaque munie d'une fenêtre est fixée en bout de la couronne, la fenêtre permettant de voir de l'extérieur une zone du disque indicateur et de savoir si le clapet est ouvert ou fermé.

La pièce arrêtée en rotation par rapport au corps de clapet peut être constituée par un flasque monté de manière démontable sur une couronne solidaire d'une partie tubulaire du boîtier.

Selon un développement de l'invention, le dispositif comprend des moyens de commande à volonté de la fermeture du clapet.

Dans le cas d'un incendie de proximité, alors que la température autour du clapet est insuffisante pour provoquer sa fermeture, il est possible, grâce à cette disposition, de commander la fermeture du clapet et d'empêcher préventivement que le contenu d'un bac de stockage équipé de ce clapet n'alimente l'incendie.

Le flasque peut être arrêté en rotation par rapport au corps de clapet par des vis engagées dans la couronne. Dans ce cas, les moyens de commande à volonté de la fermeture du clapet peuvent comporter des moyens de chauffage placés à proximité des moyens fusibles, et des moyens de commande contrôlant la mise en marche des moyens de chauffage, ces derniers étant conçus de manière à permettre une élévation de température suffisante pour provoquer, à volonté, notamment par commande à distance, la fusion des moyens fusibles et la fermeture du clapet.

De préférence, les susdits moyens de chauffage comprennent une résistance électrique disposée dans un boîtier, en particulier anti-déflagrant, placé en bout de l'arbre du clapet, ce boîtier étant lié au corps de clapet.

Les moyens de commande des moyens de chauffage peuvent comprendre une sonde de prise de température dans le boîtier, reliée à des moyens de contrôle thermostatique disposés dans une boite de commande fixée à l'extérieur du boîtier.

Les susdits moyens de commande peuvent comporter une source d'énergie électrique, en particulier une batterie, propre à assurer l'alimentation de la résistance électrique pour provoquer la fermeture du clapet.

Selon une variante de réalisation avantageuse, le flasque est arrêté en rotation, par rapport à la couronne, par des moyens de retenue débrayables, constituant les moyens de commande à volonté de la fermeture du clapet, le flasque étant monté libre de tourner relativement à la couronne lorsque les moyens de retenue sont débrayés.

Les moyens de retenue débrayables sont disposés pour transmettre, en série avec les moyens fusibles, le couple de retenue du clapet en position ouverte, par rapport au corps de clapet, à l'encontre du moyen élastique de torsion.

Les moyens de retenue débrayables peuvent comprendre un embrayage électromagnétique à disque disposé de manière à transmettre le couple de retenue du clapet entre le flasque et le corps de clapet.

L'embrayage est maintenu à l'état serré par des moyens élastiques, le desserrage étant assuré par excitation de l'enroulement électromagnétique, ou l'inverse.

Avantageusement, l'embrayage comprend un moyeu monté libre en rotation sur l'arbre du clapet et lié en rotation d'une part au susdit flasque et, d'autre part, à un rotor d'embrayage, muni de garnitures de friction, et monté axialement coulissant sur le moyeu, le rotor d'embrayage étant lié en rotation au moyeu et pouvant être bloqué en rotation, relativement au corps de clapet, sous l'action d'un disque mobile axialement, serrant le rotor et ses garnitures de friction contre un disque fixe calé sur la couronne solidaire du corps de clapet.

Le moyeu comporte, avantageusement, à son extrémité interne, une collerette munie d'au moins une extension radiale située axialement entre le flasque et le disque fixe, un bord sensiblement radial de cette extension coopérant avec un pion ancré dans le flasque pour arrêter en rotation ce flasque relativement au moyeu et au corps de clapet, le moyeu s'étendant axialement vers l'extérieur en traversant des ouvertures prévues dans le disque fixe, le rotor d'embrayage, le disque mobile, et l'enroulement de l'embrayage électromagnétique.

Le dispositif à clapet peut comporter des moyens de report à distance de l'indication de position (ouverte ou fermée) du clapet.

L'obturateur du clapet est avantageusement équipé d'une soupape de décompression propre à éliminer une surpression excessive du fluide en amont de l'obturateur, lorsque ce dernier est fermé.

L'invention consiste, mises à part les dispositions exposées ci-dessus, en un certain nombre d'autres dispositions dont il sera plus explicitement question ci-après à propos d'exemples de réalisation particuliers décrits avec référence aux dessins ci-annexés, mais qui ne sont nullement limitatifs.
La figure 1, de ces dessins, est une coupe verticale axiale d'un dispositif à clapet selon l'invention.
La figure 2 est une coupe, à plus grande échelle, suivant la ligne II-II de la figure 1.
La figure 3 est une vue partielle de droite par rapport à la figure 1.
La figure 4 est une vue en bout, de l'extrémité du boîtier, plaque et disque indicateur retirés.
La figure 5 est une vue semblable à la figure 4 de l'extrémité du boîtier munie de la plaque et du disque indicateur.
La figure 6 est une coupe partielle, semblable à celle de la figure 2, illustrant une variante de réalisation du dispositif de clapet équipé de moyens de chauffage placés à proximité des moyens fusibles.
La figure 7 est une vue en bout de l'extrémité du boîtier de la figure 6, couvercle retiré.
La figure 8 est une vue partielle, semblable à la figure 3, du dispositif à clapet équipé de moyens de report à distance de l'indication de position du clapet.
La figure 9 est une vue, à plus grande échelle, avec parties arrachées et coupées, suivant la ligne IX-IX, figure 6, des moyens de report à distance de l'indication de position.
La figure 10 est une coupe partielle, semblable à celle de la figure 6, illustrant une variante de réalisation du dispositif de clapet équipé d'un embrayage électromagnétique.
La figure 11 montre, sur la moitié gauche, une vue en bout de l'embrayage, couvercle retiré, et sur la moitié droite une vue en bout du flasque et du moyeu de l'embrayage, les autres éléments de cet embrayage étant retirés.

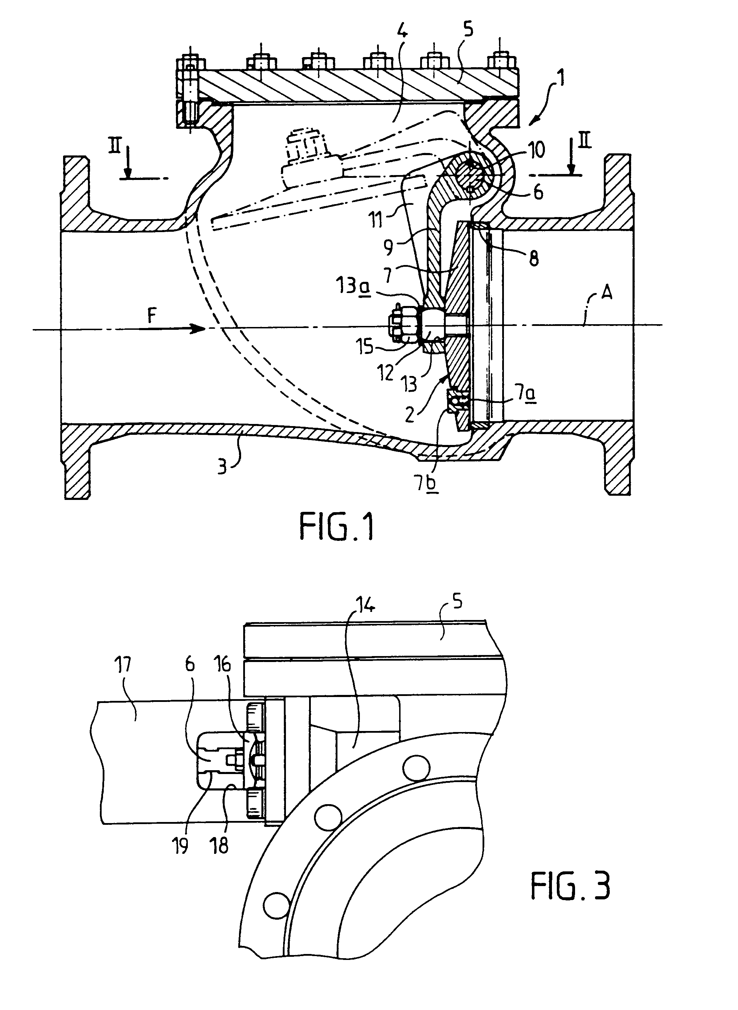

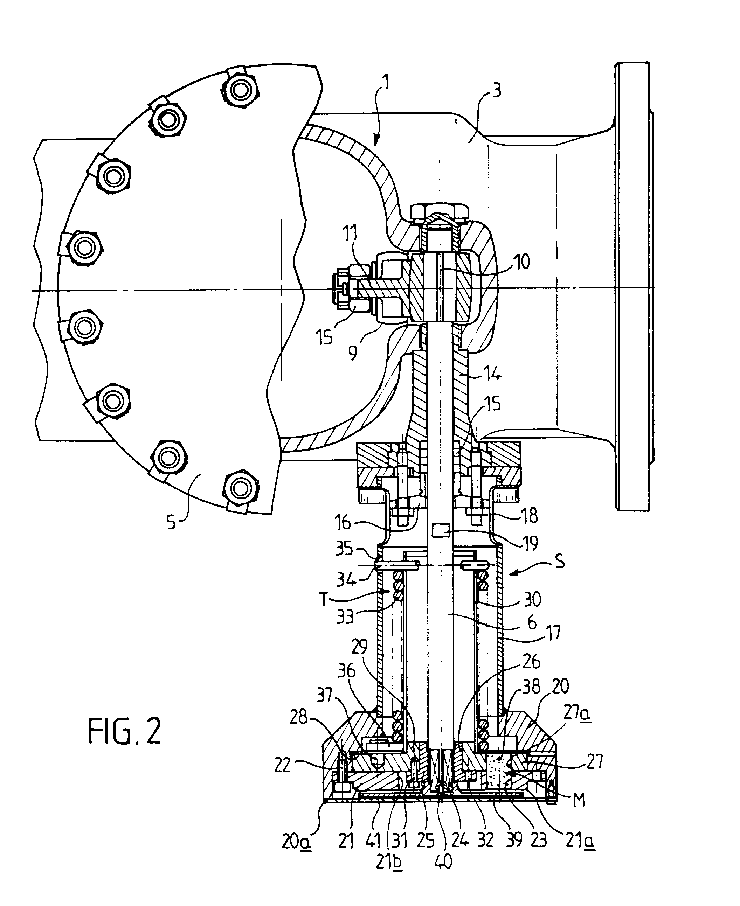

En se reportant aux dessins, notamment figures 1 et 2, on peut voir un dispositif D pour couper un circuit de fluide, en cas d'incendie. Un tel dispositif est destiné, en particulier, à être installé dans une canalisation en pied de bac d'hydrocarbures de manière à couper toute circulation d'hydrocarbures en cas d'incendie.

Le dispositif D comprend un clapet de retenue 1 à battant 2, disposé en sens inverse de l'écoulement de fluide qui se fait normalement suivant le sens de la flèche F. Autrement dit, le battant 2 se ferme dans un sens tel que le fluide ait tendance à le maintenir fermé. Ce clapet est du type à passage intégral, c'est-à-dire qu'en position d'ouverture totale (représentée en traits mixtes), les moyens d'obturation sont totalement effacés de la veine fluide.

Le clapet 1 comporte un corps de clapet 3 en forme de portion de tubulure, muni à chaque extrémité d'une bride de raccordement permettant d'insérer le corps 3 entre deux parties de tubulure. Ce corps 3 est muni, en partie haute, d'une ouverture circulaire 4 fermée par un couvercle boulonné 5. Le démontage de ce couvercle permet l'examen du clapet et son entretien.

Un arbre 6, de section circulaire, est monté rotatif dans des paliers portés par le corps de clapet comme bien visible sur la figure 2. Cet arbre 6 est orthogonal au plan passant par l'axe A du corps 3 de clapet et par l'axe de l'ouverture 4, et fait saillie à l'extérieur du corps 3.

Le battant 2 est claveté sur l'arbre 6. Ce battant 2 comprend un obturateur 7, constitué par une sorte de disque, propre à s'appliquer de manière étanche contre un siège 8 du corps de clapet ; dans la position de fermeture, l'obturateur 7 a son plan moyen orthogonal à l'axe A. L'obturateur 7 est fixé, en son centre, à l'extrémité d'un bras radial 9 bloqué en rotation sur l'arbre 6 par un système de clavettes 10, combinées avec des rainures prévues respectivement dans un alésage du bras 9 et sur l'arbre 6. Le bras 9 est muni, du côté opposé au siège 8, d'une nervure 11 à contour sensiblement à angle droit, qui est propre à venir en appui contre la paroi interne du corps de clapet 3 pour former la butée d'ouverture du battant 2.

L'obturateur 7 est avantageusement traversé par un trou 7a équipé d'une soupape de décompression 7b. Le trou 7a est prévu, par exemple, au voisinage du bord de l'obturateur éloigné de l'arbre 6. La soupape de décompression 7b est propre à s'ouvrir dans le sens de la flèche F, c'est-à-dire pour laisser passer le liquide d'amont en aval lorsque la pression en amont dépasse une valeur prédéterminée par le tarage de la soupape 7b. La présence de cette soupape 7b est avantageuse car, lorsque l'obturateur 7 s'est fermé, un volume de liquide est emprisonné en amont de cet obturateur 7 dans une canalisation située en pied de bac. L'élévation de température produite en cas d'incendie provoque une dilatation thermique du volume emprisonné en amont de l'obturateur 7. Il pourrait en résulter une augmentation de pression importante, avec risques de fuites au niveau des raccords ou des joints, si aucune évacuation n'était prévue pour le liquide. La soupape 7b permet d'éviter un tel inconvénient. Cette soupape 7b est avantageusement du type à bille et ressort.

Comme visible sur la figure 1, l'arbre 6 se trouve à l'extérieur, dans le sens radial, de la partie cylindrique du corps 3 destinée à se trouver dans l'alignement de la canalisation. Ceci permet de placer l'obturateur 2 en position ouverte dans un espace situé radialement à l'extérieur de la veine fluide, sous le couvercle 5.

La fixation de l'obturateur 7 sur le bras 9 est avantageusement réalisée à l'aide d'une rotule sphérique 12 montée dans un alésage cylindrique 13 de l'extrémité du bras 9. L'obturateur 7 est arrêté, suivant le sens perpendiculaire au bras 9, avec un certain jeu par une rondelle 13a et un écrou 15. L'obturateur 7 possède ainsi une certaine liberté lui permettant de s'appliquer correctement contre le siège 8.

La fermeture du clapet 1 est commandée par un système mécanique S propre à agir sur la partie de l'arbre 6 située à l'extérieur du corps de clapet.

Comme visible sur la figure 2, le prolongement de l'arbre 6 traverse un manchon 14 fixé sur le corps 3 de clapet et équipé, à son extrémité extérieure, de garnitures d'étanchéité externes 15 constituées par plusieurs rondelles superposées, et d'un presse-garniture 16. Le prolongement extérieur de l'arbre 6 est entouré par un boîtier cylindrique 17, coaxial, fixé de manière démontable, par exemple par des vis, sur une collerette d'extrémité du manchon 14. Au voisinage de sa fixation sur ladite collerette, le boîtier 17 comporte deux fenêtres 18, diamétralement opposées permettant d'accéder, de l'extérieur, avec une clé appropriée, à deux méplats 19, diamétralement opposés, prévus sur l'arbre 6.

La partie tubulaire du boîtier 17 est solidaire, à son extrémité éloignée du manchon 14, d'une couronne 20 dont l'ouverture centrale est fermée, vers l'extérieur, par un flasque 21 fixé de manière démontable par des vis 22 sur cette couronne 20. La face transversale d'extrémité 21 a du flasque 20 est en retrait relativement à la face transversale d'extrémité 20a de la couronne 20.

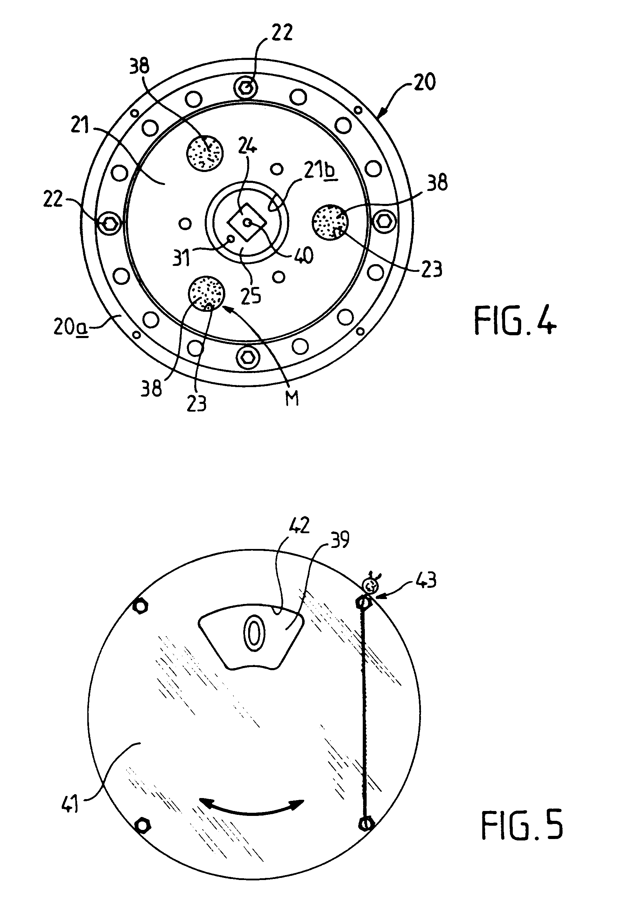

Le flasque 21 comporte des trous 23 régulièrement répartis, par exemple au nombre de trois, distants angulairement de 120 comme visible sur la figure 4. Une ouverture centrale 21 est prévue dans ce flasque 21.

L'extrémité 24 du prolongement de l'arbre 6 arrive au niveau du flasque 21. Cette extrémité 24 présente un contour polygonal, de préférence carré (voir figure 4) avec des faces planes d'une longueur suffisante pour assurer une liaison en rotation avec un organe entraîneur 25.

L'organe entraîneur 25 est constitué par une douille présentant un logement intérieur de section carrée conjuguée de celle de l'extrémité 24 et dont la surface extérieure cylindrique est engagée dans un alésage 26 d'une pièce intermédiaire 27.

Cette pièce intermédiaire 27 ou crabot a la forme d'une plaque circulaire montée libre en rotation dans un alésage de la couronne 20, ce crabot étant maintenu, sans aucun serrage axial, entre un épaulement 28 de la couronne et le flasque 21. Le crabot 27 comporte, autour de son alésage 26, du côté intérieur, une collerette 29 sur laquelle est fixé un tube 30 qui s'étend jusqu'au voisinage des fenêtres 18.

L'organe entraîneur 25 est fixé sur le crabot 27 par des vis 31 coopérant avec des trous taraudés correspondants prévus dans le crabot 27. Des trous d'extraction 32 supplémentaires sont en outre prévus dans la collerette de l'organe entraîneur 25 pour permettre, à l'aide de vis prenant appui contre la face du crabot 27, d'extraire l'organe entraîneur dudit crabot.

Un moyen élastique de torsion T, avantageusement constitué par un ressort hélicoïdal de torsion 33, est prévu pour rappeler en position de fermeture le battant 2, en exerçant un couple de rappel en bout de l'arbre 6. Ce ressort 33 est disposé à l'intérieur du boîtier 17, coaxialement à l'arbre 6, autour du tube 30 dont le diamètre extérieur n'est que légèrement inférieur au diamètre interne des spires du ressort 33. Le ressort 33 s'étend sur une longueur axiale sensiblement égale à celle du tube 30.

La dernière spire, vers l'intérieur, du ressort 33, se prolonge radialement par une extension 34 engagée dans un trou 35 du boîtier 17.

L'autre spire extrême du ressort 33, située vers l'extérieur, se prolonge par une extension radiale 36 engagée et bloquée dans un logement d'un pion 37 solidaire du crabot 27.

Le ressort de torsion 33 est tendu de manière à appliquer l'obturateur 7 contre son siège 8 suivant une pression déterminée, par exemple de l'ordre de 5 bars, qui est ainsi parfaitement contrôlée, indépendamment de la pression hydrostatique que peut exercer le fluide situé en amont de l'obturateur 7 fermé. Il est à noter, comme cela sera expliqué plus loin, qu'en cas de fermeture de l'obturateur 7 due à un incendie, il reste possible d'injecter en sens inverse, à l'aide de moyens de pompage suffisants pour vaincre le couple du ressort 33, de l'eau ou de la mousse pour éteindre un incendie.

Le battant 2 est maintenu en position normale ouverte, à l'encontre du couple exercé par le ressort 33, à l'aide de moyens fusibles M constitués par des organes 38 de blocage en rotation du crabot 27 relativement au flasque 21. Les organes de blocage 38 sont constitués par des pions cylindriques en alliage fusible, à une température prédéterminée, par exemple de l'ordre de 70 _{°} C. Bien entendu, la limite admissible de température est choisie en fonction des conditions normales de fonctionnement et de la température ambiante.

Ces pions 38 travaillent en cisaillement et sont engagés dans les trous 23 du flasque 21 et dans des trous 27a, de même diamètre, du crabot 27 qui se trouvent en face des trous 23 lorsque le crabot 27 occupe une position angulaire correspondant à l'ouverture du battant 2. Dans l'exemple considéré, comme visible sur la figure 4, trois pions 38 en matière fusible sont prévus.

Un disque indicateur 39 est fixé de manière démontable, à l'aide d'une vis 40, en bout de l'arbre 6 ; le disque 39 est calé en rotation relativement à l'arbre 6, par exemple à l'aide d'un manchon de longueur réduite prévu du côté intérieur et dont la section transversale est carrée de manière à coiffer l'extrémité de l'arbre 6. La vis 40 n'a pour fonction qu'un maintien axial du disque 39 relativement à l'arbre 6. Le disque 39 peut tourner librement, avec l'arbre 6, relativement au flasque 21.

Le disque 39 peut comporter des zones de couleurs différentes, par exemple une zone de couleur verte pour indiquer que le clapet 1 est "ouvert" et une zone de couleur rouge pour indiquer que le clapet 1 est "fermé". En plus, des indications telles que "O" (ouvert) (voir figure 5) ou "F" (fermé) peuvent être inscrites sur ces zones.

Une plaque 41 (voir également figure 5) circulaire est fixée en bout de la couronne 20 par des vis, cette plaque comportant une fenêtre 42 (figure 5) de forme sensiblement trapézoïdale, permettant de voir les zones d'indication du disque 39.

Un plombage 43 peut être prévu sur deux des vis de fixation de la plaque 41, ce qui permet, en cas de rupture, de savoir immédiatement qu'une personne non autorisée est intervenue au niveau du boîtier 17 et, éventuellement, du tarage du ressort 33.

Ceci étant, le fonctionnement du dispositif de l'invention et sa maintenance sont les suivants.

En fonctionnement normal, le clapet 1 est en position ouverte, le battant 2 étant relevé.

Lorsqu'un feu extérieur apparaît et que la température au niveau du boîtier 17 et des fusibles 38 atteint une température prédéterminée, par exemple de l'ordre de 70 C/80° C, les fusibles 38 fondent et libèrent en rotation le crabot 27 et donc l'arbre 6 lié en rotation à ce crabot 27, relativement au flasque 21.

Le couple du ressort de torsion 33 qui s'exerce entre le boîtier 17, et donc le corps 3 du clapet auquel est fixé ce boîtier 17, et le crabot 27, provoque la rotation de ce crabot 27 et de l'arbre 6 dans le sens de fermeture du clapet 1. L'obturateur 7 est appliqué contre le siège 8 suivant une pression déterminée par le tarage du ressort 33.

Il est possible de réinjecter dans le bac de fluide, au pied duquel est monté le dispositif 1, de la mousse sous pression suffisante ou de l'eau selon la nature du fluide stocké dans le bac, dans la mesure où la pression d'injection est suffisante pour vaincre le couple, connu, exercé par le ressort 33.

Les opérations de maintenance et de contrôle de fonctionnement, dont la périodicité est à convenir, s'effectuent de la manière suivante.

On dépose, tout d'abord, la plaque 41 et le disque indicateur 39.

Une première opération consiste à contrôler la manoeuvrabilité de l'obturateur 2.

Pour cette opération, on désolidarise en rotation l'arbre 6 du crabot 27 afin de pouvoir manoeuvrer l'arbre 6 à l'aide d'une clé dynamométrique, pour vérifier les conditions de rotation du battant 2, notamment l'absence de tout grippage.

On commence par introduire une clé appropriée à travers l'une des fenêtres 18 pour exercer une prise sur les méplats 19 de l'arbre 6, au voisinage du presse-garniture 16, afin de maintenir le battant 2 dans la position d'ouverture.

On retire ensuite l'organe entraîneur 25 en démontant les vis 31 et en s'aidant des taraudages d'extraction 32.

L'arbre 6 est alors libre en rotation relativement au crabot 27.

On met ensuite en prise une clé dynamométrique avec l'extrémité carrée de l'arbre 6.

Après avoir retiré la clé qui était en prise avec les méplats 19, on effectue à l'aide de la clé dynamométrique, quelques manoeuvres, par exemple deux manoeuvres "ouverture/fermeture" de l'obturateur 2 en s'assurant que le couple nécessité par ces manoeuvres n'est pas supérieur aux valeurs normales.

Lorsque ce contrôle est terminé, on replace le battant 2 dans sa position ouverte et on remet en place l'organe entraîneur 25 pour rétablir la liaison en rotation entre l'arbre 6 et le crabot 27.

Une deuxième opération de maintenance consiste à contrôler le dispositif de sécurité et plus particulièrement le couple de rappel exercé par le ressort 33.

Toujours après démontage de la plaque 41 et du disque 39, on met en prise une clé dynamométrique avec l'extrémité carrée de l'arbre 6.

On dévisse et on retire les vis de fixation 22 du flasque 21, en retenant l'arbre 6, à l'aide de la clé dynamométrique, contre le couple de rappel exercé par le ressort 33.

On relâche progressivement, à l'aide de la clé dynamométrique, l'arbre 6 et le ressort 33 jusqu'à la position de fermeture de l'obturateur 7. Au cours de cette manoeuvre, on vérifie que le couple de rappel exercé par le ressort 33 reste égal ou inférieur au couple annoncé.

Toujours à l'aide de la clé dynamométrique, en agissant sur l'extrémité de l'arbre 6, on reposition- ne le battant 7 en position ouverte, en contrôlant le couple développé au cours de cette manoeuvre. On répète une deuxième fois ces opérations ferme- ture/ouverture en vérifiant le couple exercé.

Après avoir ramené l'obturateur 7 en position ouverte, on immobilise à nouveau le flasque 21 relativement à la couronne 20, à l'aide des quatre vis 22 remises en place.

On peut alors retirer la clé dynamométrique et remettre en place le disque indicateur 39 dans une position telle que la zone, par exemple verte et affectée éventuellement de la lettre O, apparaisse à travers la fenêtre 42 de la plaque couvercle 41 lorsqu'elle est remise en place.

Le dispositif de l'invention est particulièrement compact avec la disposition coaxiale du ressort 33 et du boîtier 17. Il offre une grande fiabilité et une bonne sécurité car le ressort 33 est à l'abri, complètement enfermé dans un boîtier qui peut être plombé de sorte que le tarage de ce ressort 33 ne peut être modifié par une personne non autorisée, sans que l'on s'en aperçoive.

Les opérations de maintenace et de contrôle sont simples et rapides à effectuer.

L'application de l'obturateur 7 sur son siège 8 s'effectue sous une pression contrôlée. Le travail en cisaillement des éléments fusibles 38 permet, sous un encombrement réduit, de bénéficier d'une grande sécurité de fonctionnement.

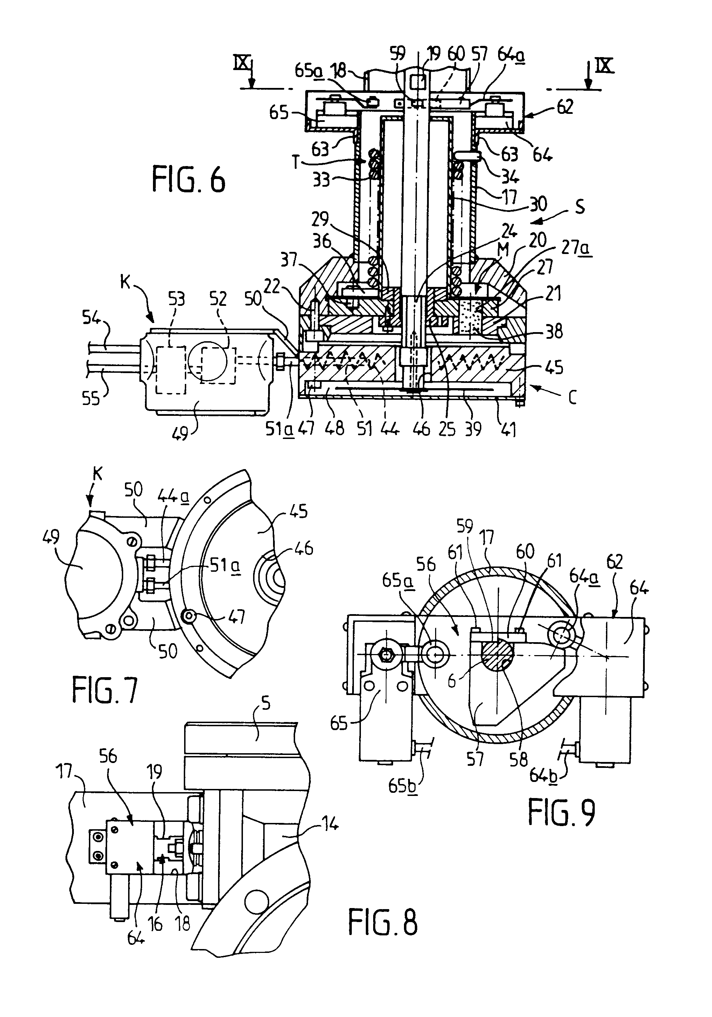

En se reportant à la figure 6, on peut voir une variante de réalisation du dispositif à clapet comprenant des moyens de commande à volonté de la fermeture du clapet. Ceci permet à un opérateur, exerçant la surveillance d'une installation dans laquelle est installé le clapet, de commander, en particulier à distance, la fermeture du clapet dans un temps donné, et ce avant même qu'un incendie de proximité ne se soit propagé jusqu'au dispositif à clapet.

Les éléments du dispositif de la figure 6 identiques ou jouant des rôles analogues à des éléments déjà décrits à propos des figures précédentes, sont désignés par les mêmes références numériques sans que leur description soit reprise, ou avec une description succincte.

Les moyens de commande à volonté de la fermeture du clapet comportent des moyens de chauffage C placés à proximité des moyens fusibles M formés par les pions cylindriques 38 en métal ou en alliage fusible à température prédéterminée.

Les moyens de chauffage C comprennent une résistance électrique 44 disposée dans un boîtier 45 anti-déflagrant placé en bout de l'arbre 6 du clapet, coaxialement à l'ensemble. Le boîtier 45 peut être rempli d'une matière isolante électriquement dans laquelle est noyée la résistance 44. Un trou central 46 est prévu dans le boîtier 45 pour permettre le passage libre de l'extrémité de l'arbre 6. Le boîtier 45 est fixé, de manière démontable par des vis 47, sur la couronne 20, elle-même liée au corps de clapet. Le couvercle 41 est fixé par des vis sur l'extrémité frontale du boîtier 45. Ce dernier comporte un rebord périphérique en saillie suivant la direction axiale et contre lequel est fixé le couvercle 41. Un espace libre 48 est ainsi réservé entre le couvercle 41 et la face transversale du boîtier 45. Le disque indicateur 39 est fixé sur l'extrémité de l'arbre 6 de manière à pouvoir tourner dans l'espace libre 48. Comme expliqué avec référence à la figure 5, le couvercle 41 comporte une fenêtre permettant d'observer la position du disque 39. Les bornes de la résistance électrique 44 sont reliées, par un câble 44a, à des moyens de commande K comprenant une boite 49 cylindrique, également anti-déflagrante, fixée latéralement à l'extérieur du boîtier 45, par des pattes 50 (voir figure 7).

Les moyens de commande K comprennent une sonde 51 de prise de température dans le boîtier 45 reliée par un câble 51 à à des moyens de contrôle thermostatiques 52 disposés dans la boite K. Ces moyens de contrôle thermostatique 52, comprennent, par exemple, un relais thermique pour limiter la température de chauffage du boîtier 45 à une valeur prédéterminée, par exemple de l'ordre de 200 _{°} C, suffisante toutefois pour provoquer la fusion des pions 38 en un temps limité.

Les moyens de commande K peuvent comporter une source d'énergie électrique constituée en particulier par une batterie 53 propre à assurer l'alimentation de la résistance électrique 44 lorsque les moyens de contrôle thermostatique 52 ferment le circuit d'alimentation de cette résistance, et lorsque l'opérateur actionne à distance les moyens de commande.

En variante, l'alimentation électrique peut être assurée à partir d'une source extérieure reliée à la boite 49 par un câble 54.

Il est possible de prévoir, à la fois, une alimentation extérieure et une alimentation par batterie 53, cette dernière n'intervenant, par exemple, qu'en cas de défaillance de l'alimentation extérieure.

Les moyens de commande K sont reliés par un câble électrique 55 à un poste de commande (non représenté) d'où un opérateur peut provoquer l'actionnement des moyens de commande K et l'alimentation électrique de la résistance 44, pour provoquer la fermeture du clapet 1.

Le dispositif à clapet comporte, en outre, des moyens 56 de report à distance de l'indication de position "ouverte" ou "fermée" du clapet. Ces moyens de report à distance, ou de téléindication, 56 sont prévus au niveau des fenêtres 18 de la partie tubulaire 17, et comprennent une plaquette 57 (voir figure 9), sensiblement en forme de triangle rectangle isocèle, dont le plan moyen est orthogonal à l'axe de l'arbre 6. Cette plaquette 57 comporte, sur l'un de ses bords, une échancrure 58 semi-circulaire, dans laquelle est engagé l'arbre 6. Ce dernier comporte du côté opposé au fond de l'échancrure 58, un méplat 59, situé au voisinage d'un des méplats 19, vers l'extérieur, par rapport au corps de clapet. Une clavette 60 (figure 9) prend appui contre ce méplat 59 et bloque la plaquette 57 sur l'arbre 6 grâce au serrage de vis 61 prévues à chaque extrémité de la clavette 60 et engagées dans des trous taraudés prévus sur la tranche de la plaquette 57.

Un support 62 traverse diamétralement l'élément 17 en passant par les fenêtres 18 et en faisant saillie de part et d'autre de l'élément 17. Le support 62 est fixé par des pattes 63 (figure 6) sur la surface extérieure de l'élément 17. Deux contacts fin de course 64, 65, diamétralement opposés, sont fixés sur le support 62. Chaque contact comporte un bras mécanique 64a, 65a destiné à coopérer avec la plaquette 57 pour actionner un contact électrique relié par un câble correspondant 64b, 65b à des organes de signalisation situés, par exemple, dans une salle de contrôle où se trouve un opérateur.

L'un des contacts fin de course, par exemple le contact 64 est actionné par la plaquette 57 lorsque le clapet est en position ouverte, tandis que l'autre contact, par exemple 65, est actionné lorsque le clapet est en position fermée. L'opérateur, à distance, peut donc connaître à tout moment la position du clapet et, notamment, savoir si ce clapet s'est bien fermé lorsque le déclenchement des moyens de chauffage 45 a été commandé.

Ceci étant, le fonctionnement du dispositif des figures 6 à 9 est le suivant.

Un opérateur, exerçant à distance la surveillance de l'installation dans laquelle est installé le dispositif à clapet de la figure 6, peut, s'il l'estime nécessaire à titre préventif, commander à distance la fermeture de l'obturateur 7 en déclenchant l'alimentation électrique de la résistance 44.

Par conductibilité thermique, la chaleur produite par la résistance électrique 44 est transmise aux pions 38 en alliage fusible. Une température suffisante pour provoquer la fusion de ce pion est atteinte en un temps donné relativement court.

Grâce aux moyens de report à distance 56 de la position du clapet, l'opérateur peut constater la fermeture effective de l'obturateur.

Par cette commande à distance, l'opérateur peut empêcher que le moindre contenu d'un bac de stockage d'hydrocarbures alimente un incendie qui s'est déclenché à distance et qui, en se propageant, pourrait atteindre ce bac.

Tous les avantages du dispositif à clapet évoqués à propos des figures 1 à 5 sont conservés dans la variante de réalisation des figures 6 à 9.

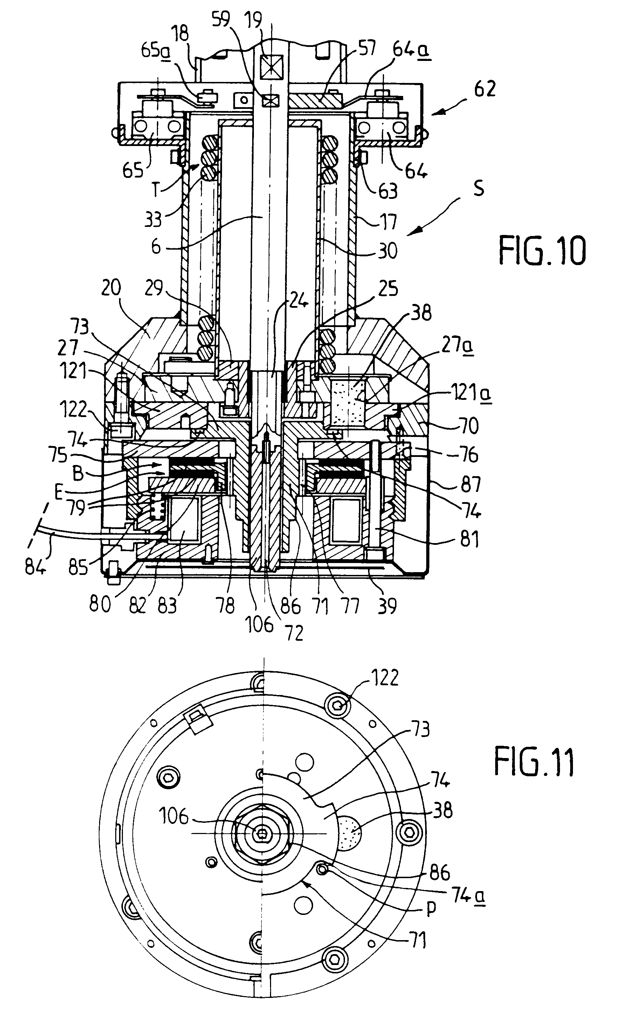

En se reportant aux figures 10 et 11, on peut voir une variante de réalisation du dispositif à clapet comprenant des moyens de retenue débrayables B constituant les moyens de commande à volonté de la fermeture du clapet.

Les éléments du dispositif des figures 10 et 11 identiques ou jouant des rôles analogues à des éléments déjà décrits à propos des figures précédentes sont désignés par les mêmes références numériques sans que leur description soit reprise. Le cas échéant, ces références numériques sont précédées du chiffre 1 des centaines.

Le flasque 121, comportant les trous 23 dans lesquels sont engagés les pions fusibles 38, est monté libre de tourner relativement à la couronne 20. Ce flasque 121 comporte un épaulement annulaire 121 a, situé du côté du crabot 27. Cet épaulement 121 a est emprisonné, avec un jeu axial et radial suffisant pour permettre une rotation libre du flasque 121, entre la face transversale de la couronne 20 et une bague 70, dont le contour intérieur est conjugué du contour extérieur du flasque 121. La bague 70 est fixée sur la couronne 20 à l'aide de vis 122.

Le flasque 121 est arrêté en rotation, par rapport à la couronne 20 et au corps de clapet, par les moyens de retenue débrayables B, avantageusement constitués par un embrayage électromagnétique E à disque.

L'embrayage E comporte un moyeu 71, traversé par l'arbre 6 et son prolongement 106. L'extrémité de l'arbre 6 présente un contour hexagonal sur lequel est calé en rotation l'organe entraîneur 25. Le prolongement 106 présente un contour semblable et est muni, à son extrémité externe, du disque indicateur 39.

L'alésage du moyeu 71 a un diamètre suffisant pour permettre la libre rotation de l'arbre 6 et de son prolongement 106 à l'intérieur de cet alésage. Le prolongement 106 est fixé par une vis coaxiale 72 sur l'extrémité de l'arbre 6.

Le moyeu 71 comporte, à son extrémité interne tournée vers le crabot 27, une collerette 73 munie de deux extensions radiales 74 diamétralement opposées. Les extensions 74 sont situées axialement entre le flasque 121 et un disque 75 fixe par rapport à la couronne 20 et au corps de clapet. Un bord sensiblement radial 74a d'une extension 74 coopère avec un pion p ancré dans le flasque 121 pour arrêter en rotation ce flasque 121 relativement au moyeu 71.

Le disque 75 est fixé, par des vis 76, sur la bague 70. Le disque 75 comporte une ouverture centrale traversée par le moyeu 71. Ce moyeu comporte, du côté du disque 75 opposé à la collerette 73, des nervures longitudinales 77 prévues sur sa surface externe.

Un rotor d'embrayage 78 comportant un alésage, muni de cannelures conjuguées des nervures 77, est monté sur le moyeu 71 de manière à pouvoir coulisser axialement sur ce moyeu, tout en étant lié en rotation audit moyeu. Le rotor d'embrayage 78 est muni, sur chaque face, de garnitures de friction 79 propres à frotter respectivement contre le disque fixe 75 et contre un disque 80 pouvant coulisser axialement. Le disque 80 est guidé en coulissement, mais arrêté en rotation, par des vis 81 servant à la fixation de l'armature 82 de l'enroulement 83 de l'embrayage électromagnétique sur le disque fixe 75. Un câble 84 assure l'alimentation électrique de cet enroulement 83 qui peut être commandé à distance.

L'embrayage est maintenu à l'état serré, c'est-à-dire que les garnitures 79 sont comprimées entre le disque fixe 75 et le disque mobile 80, par des ressorts 85. La force de serrage exercée par les ressorts 85 est avantageusement choisie pour que le couple de freinage exercé par l'embrayage soit au moins égal au double du couple exercé par le ressort 33.

Le débrayage est assuré par l'action électromagnétique de l'enroulement 83 lorsqu'il est alimenté ; le disque mobile 80 est alors attiré contre l'armature fixe 82, à l'encontre des ressorts 85, ce qui libère en rotation le rotor 78 et le moyeu 71.

En variante, la solution inverse est possible, c'est-à-dire que l'embrayage est maintenu serré par l'action électromagnétique, et est desserré par actions des ressorts dès que l'alimentation électrique de l'enroulement cesse. Bien que cette variante consomme de l'énergie en permanence pour le maintien à l'état serré, elle donne une sécurité en cas de coupure de courant.

L'armature 82 délimite une ouverture centrale dans laquelle est engagé le moyeu 71 qui présente, au-delà des nervures longitudinales 77, une portée 86 hexagonale.

Le prolongement 106 s'étend au-delà de la face transversale externe de l'armature 82 pour permettre la fixation du disque indicateur 39. Un capot 87 est fixé sur l'armature 82 et vient coiffer, par une jupe cylindrique, l'extrémité de la bague 70.

Le couple de retenue du clapet et de l'arbre 6 en position d'ouverture, à l'encontre de l'action du ressort 33, est transmis en série par les pions 38 (du crabot 27 au flasque 121) et par l'embrayage E (du moyeu 71 au disque fixe 75).

Le fonctionnement résulte immédiatement des explications qui précèdent.

En cas d'élévation anormale de la température extérieure due à un incendie, les pions 38 entrent en fusion et libèrent en rotation le crabot 27 relativement au flasque 121 qui est arrêté par l'embrayage E. Le crabot 27 et l'arbre 6, sous l'action du ressort 33, vont tourner, et le clapet va se fermer.

En dehors de cette fermeture obtenue par fusion des pions 38, il est possible à l'opérateur de commander, à volonté, la fermeture du clapet en envoyant une impulsion électrique appropriée, par le câble 84 sur le bobinage 83. Le disque mobile 80 est alors attiré contre l'armature 82 de sorte que le rotor d'embrayage 78 et les garnitures de friction 79 ne sont plus serrées. Le rotor 78 peut alors tourner et, avec lui, le moyeu 71, sous l'action du couple de rappel exercé par le ressort 33. Le flasque 121 est entraîné en rotation par les extensions 74 du moyeu.

Les pions 38 assurent l'entraînement en rotation, à partir du flasque 121, du crabot 27 et de l'arbre 6 qui place le clapet en position de fermeture.

La fermeture du clapet, commandée à l'aide de l'embrayge électromagnétique est quasiment instantanée. Cette fermeture est obtenue beaucoup plus rapidement que dans le cas de la figure 6. En outre la fermeture est obtenue sans détruire les pions 38.

L'impulsion électrique de commande, envoyée sur l'enroulement 83, peut être très brève puisque dès que le disque mobile 80 est attiré, l'arbre 6 tourne et le clapet se ferme sous l'action du ressort 33. En position fermée du clapet, l'embrayage E peut revenir à l'état serré, après la fin de l'impulsion électrique. Dans le cas où l'on souhaiterait effectuer une injection de mousse (ou équivalent) à l'encontre du clapet fermé, le dispositif de butée unilatérale p, 74a autorise la rotation de l'arbre 6 et du clapet pratiquement jusqu'à la position d'ouverture, à l'encontre du seul couple du ressort 33.

Il est possible de réarmer le dispositif et de ramener le clapet en position d'ouverture en agissant, à l'aide d'une clé appropriée, sur la portée hexagonale 86 pour faire tourner le clapet à l'encontre du ressort 33, après avoir démonté le capot 87 et le disque indicateur 39. Lors de ce réarmement du dispositif, on maintient sous tension l'enroulement 83 pour permettre la rotation du plateau 78 et des garnitures de friction 79. On coupe l'alimentation de l'enroulement 83 dès que le clapet se retrouve en position d'ouverture.

La commande de la fermeture du clapet à l'aide de l'embrayage E est réversible et ne nécessite pas un remplacement des fusibles 38. La fermeture peut être commandée par exemple en cas d'incident sur une vanne, sans qu'il y ait nécessairement un incendie.

## Revendications

1. Dispositif pour couper un circuit de fluide en cas d'incendie, comportant un clapet (1) à battant rotatif (2), ce clapet comprenant un corps de clapet (3) dans lequel est monté rotatif un arbre (6) faisant saillie à l'extérieur du corps, l'ensemble étant tel que lorsque le battant (2) est en position ouverte la veine de fluide est entièrement libérée, le dispositif comportant en outre un système mécanique (S) pour la commande de la fermeture du clapet (1), ce système mécanique (S) étant propre à agir sur la partie de l'arbre (6) extérieure au corps de clapet (3), le système mécanique (S) étant déclenché par des moyens fusibles (M) sensibles à la température extérieure, caractérisé par le fait que le système mécanique (S) comprend, d'une part, un moyen élastique de torsion (T) situé à l'extérieur du corps de clapet (3) et tendu de manière à solliciter l'arbre (6) et le battant (2) en rotation dans le sens de la fermeture, et d'autre part, un organe de liaison (27) calé en rotation sur l'arbre (6) et comportant des trous (27a) propres à être amenés en regard de trous correspondants (23) prévus dans une pièce (21, 121) arrêtée en rotation par rapport au corps de clapet (3), les moyens fusibles (M) étant constitués par au moins un organe (38) de blocage en rotation, engagé dans un trou (27a) de l'organe de liaison et dans un trou (23) de la pièce (21, 121).

2. Dispositif selon la revendication 1, caractérisé par le fait que le moyen élastique de torsion (T) est logé dans un boîtier (17) solidaire du corps de clapet (3).

3. Dispositif selon la revendication 1 ou 2, caractérisé par le fait que le moyen élastique de torsion (T) est constitué par un ressort hélicoïdal de torsion (33), disposé coaxialement à l'arbre (6), une extrémité (34) du ressort (33) étant bloquée en rotation relativement au corps de clapet (3) tandis que l'autre extrémité (36) du ressort (33) est liée en rotation à l'extrémité de l'arbre (6).

4. Dispositif selon la revendication 3, caractérisé par le fait que l'organe de liaison est constitué par une pièce intermédiaire ou crabot (27) lié en rotation à l'extrémité (24) du prolongement de l'arbre (6) par un organe entraîneur (25) démontable.

5. Dispositif selon la revendication 4, caractérisé par le fait que l'extrémité (24) de l'arbre (6) a un contour polygonal, et l'organe entraîneur (25) est constitué par une douille présentant un logement intérieur de section conjuguée de celle de l'extrémité (24) de l'arbre.

6. Dispositif selon la revendication 4 ou 5, caractérisé par le fait que le crabot (27) comporte, du côté intérieur, une collerette (29) sur laquelle est fixé un tube (30) autour duquel est disposé le ressort (33).

7. Dispositif selon la revendication 2, caractérisé par le fait que le boîtier (17) comporte, au voisinage de sa fixation sur un manchon (14), fixé sur le corps (3) de clapet, deux fenêtres (18) diamétralement opposées, tandis que l'arbre (6) comporte deux méplats (19) diamétralement opposés auxquels les fenêtres (18) permettent d'accéder de l'extérieur, avec une clé appropriée.

8. Dispositif selon l'une quelconque des revendications précédentes, caractérisé par le fait que les organes (38) de blocage en rotation sont constitués par des pions cylindriques en métal ou en alliage fusible à température prédéterminée.

9. Dispositif selon l'une des revendications 4 à 6, caractérisé par le fait qu'un disque indicateur (39) est monté en bout d'arbre (6), calé en rotation sur cet arbre, ce disque indicateur comportant des zones d'indication, en particulier de couleurs différentes, tandis qu'une plaque (41) est munie d'une fenêtre (42) permettant de voir de l'extérieur une zone du disque indicateur (39) et de savoir si le clapet (1) est ouvert ou fermé.

10. Dispositif selon l'une quelconque des revendications précédentes, caractérisé par le fait que le moyen élastique de torsion (T) est taré pour appliquer le battant (2) du clapet sur son siège suivant une pression prédéterminée.

11. Dispositif selon l'une des revendications précédentes, caractérisé par le fait que la pièce (21) arrêtée en rotation par rapport au corps de clapet est constituée par un flasque (21, 121) monté de manière démontable sur une couronne (20) solidaire d'une partie tubulaire du boîtier (17).

12. Dispositif selon l'une quelconque des revendications précédentes, caractérisé par le fait qu'il comprend des moyens de commande à volonté de la fermeture du clapet.

13. Dispositif selon la revendication 11, caractérisé par le fait que le flasque (21) est arrêté en rotation par rapport au corps de clapet par des vis (22) engagées dans la couronne (20).

14. Dispositif selon l'ensemble des revendications 12 et 13, caractérisé par le fait que les moyens de commande à volonté de la fermeture du clapet comportent des moyens de chauffage (C) placés à proximité des moyens fusibles (M, 18), et des moyens de commande (K) contrôlant la mise en marche des moyens de chauffage (C), ces derniers étant conçus de manière à permettre une élévation de température suffisante pour provoquer, à volonté, notamment par commande à distance, la fusion des moyens fusibles (38) et la fermeture du clapet.

15. Dispositif selon la revendication 14, caractérisé par le fait que les moyens de chauffage (C) comprennent une résistance électrique (44) disposée dans un boîtier (45), en particulier anti-déflagrant, placé en bout de l'arbre (6) du clapet, ce boîtier (45) étant lié au corps de clapet.

16. Dispositif selon la revendication 15, caractérisé par le fait que les moyens de commande (K) comprennent une sonde (51) de prise de température dans le boîtier (45), reliée à des moyens de contrôle thermostatique (52) disposés dans une boite de commande (49) fixée à l'extérieur du boîtier (45).

17. Dispositif selon la revendication 15 ou 16 , caractérisé par le fait que les moyens de commande (K) comportent une source d'énergie électrique (53), en particulier une batterie, propre à assurer l'alimentation de la résistance électrique (44) pour provoquer la fermeture du clapet.

18. Dispositif selon l'ensemble des revendications 11 et 12, caractérisé par le fait que le flasque (121) est arrêté en rotation, par rapport à la couronne (20), par des moyens de retenue débrayables (B), constituant les moyens de commande à volonté de la fermeture du clapet, le flasque (121) étant monté libre de tourner relativement à la couronne (20) lorsque les moyens de retenue (B) sont débrayés.

19. Dispositif selon la revendication 18, caractérisé par le fait que les moyens de retenue débrayables (B) comprennent un embrayage (E) électromagnétique à disque propre à transmettre le couple de rotation en série avec les pions fusibles.

20. Dispositif selon la revendication 19, caractérisé par le fait que l'embrayage (E) est maintenu à l'état serré par des moyens élastiques (85), le desserrage étant assuré par excitation de l'enroulement électromagnétique (83), ou l'inverse.

21. Dispositif selon la revendication 19 ou 20, caractérisé par le fait que l'embrayage (E) comprend un moyeu (71) libre en rotation sur l'arbre (6) du clapet et lié en rotation d'une part au susdit flasque (121) et, d'autre part, à un rotor d'embrayage (78), muni de garnitures de friction (79), et monté axialement coulissant sur le moyeu (71), le rotor d'embrayage (78) étant lié en rotation au moyeu (71) et pouvant être bloqué en rotation, relativement au corps de clapet, sous l'action d'un disque (80) mobile axialement, propre à serrer le rotor (78) et ses garnitures de friction (79) contre un disque fixe (75) calé sur la couronne (20) solidaire du corps de clapet.

22. Dispositif selon la revendication 21, caractérisé par le fait que le moyeu (71) comporte, à son extrémité interne, une collerette (73) munie d'au moins une extension radiale (74) située axialement entre le flasque (121) et le disque fixe (75), un bord sensiblement radial (74a) de cette extension coopérant avec un pion (p) ancré dans le flasque (121) pour arrêter en rotation ce flasque (121) relativement au moyeu (71), le moyeu s'étendant axialement vers l'extérieur en traversant des ouvertures prévues dans le disque fixe (75), le rotor d'embrayage (78), le disque mobile (80), et l'armature (82) de l'embrayage électromagnétique (E).

23. Dispositif selon l'une quelconque des revendications 12 à 22, caractérisé par le fait qu'il comporte des moyens (56) de report à distance de l'indication de position (ouverte ou fermée) du clapet.

24. Dispositif selon la revendication 23, caractérisé par le fait que les moyens (56) de report à distance comprennent une plaquette (57) fixée sur l'arbre (6) du clapet et deux contacts fin de course (64, 65), liés au corps de clapet, correspondant à la position ouverte et à la position fermée du clapet, la plaquette (57) coopérant avec l'un de ces contacts lorsque le clapet se trouve dans la position correspondante.

25. Dispositif selon l'une quelconque des revendications précédentes, caractérisé par le fait que l'obturateur (7) du clapet est équipé d'une soupape de décompression (7b) propre à éliminer une surpression excessive du fluide en amont de l'obturateur, lorsque ce dernier est fermé.
